# EUROPEAN PATENT SPECIFICATION

(11) **EP 3 253 626 B1**
(45) Date of publication and mention of the grant of the patent: **20.11.2019**
(21) Application number: 15705524.5
(22) Date of filing: 04.02.2015
(51) Int. Cl.: B60R 19/52

(54) **AUTOMOTIVE GRILLE WITH IMPROVED RETENTION CHARACTERISTICS**
AUTOMOBILKÜHLERGRILL MIT VERBESSERTEN HALTEEIGENSCHAFTEN
CALANDRE D'AUTOMOBILE AYANT DES CARACTÉRISTIQUES DE RETENUE AMÉLIORÉES

(43) Date of publication of application: 13.12.2017
(73) Proprietor: Toyota Motor Europe, 1140 Brussels (BE)
(72) Inventor: ALTUNCAN, Hakan, B-1200 Brussels (BE)
(74) Representative: Cabinet Beau de Loménie
(86) International application number: PCT/EP2015/052339
(87) International publication number: WO 2016/124238

(56) References cited:
- JP-A- 2002 059 794
- JP-A- 2009 262 761
- JP-A- 2010 242 786

## Description

### Field of the Disclosure

The present disclosure is related to automotive grilles, and more particularly to automotive grilles having improved characteristics for maintaining an installed position on an automobile.

### Background of the Disclosure

Installation ergonomics have become more important recently as employers seek to improve working conditions for their employees. Work on an assembly-line can sometimes result in certain repetitive actions which may not be ergonomically sound for a worker, and may result in certain discomfort for such an employee.

At the same time, quality standards are continuously rising as manufacturers continually improve their assembly techniques and provide their workers with improved tools and parts designed to improve installation characteristics.

One example can be found in vehicle trim pieces (e.g., grilles or automotive decorations). Installation of such trim pieces can be problematic based on installation location access, and methods used for such installation. It is often desirable to fasten such trim pieces such that they remain well installed and do not unintentionally come unattached due to external forces.

Previous designs of, for example, automotive grille inserts have generally focused on increasing rigidity of retaining members to prevent unintentional disengagement of the retaining members from a holding fixture. Where reliability of prior art retaining structures has been improved (e.g., by increased rigidity), installation force may increase and this can result in workers having to exert ergonomically incorrect levels of force in order to accomplish the installation.

JP2009-262761 discloses a grill fitting structure of vehicle bumper.

JP2010-242786 discloses a part installing structure to resin part.

JP2002-059794 discloses a front bumper.

### SUMMARY OF THE DISCLOSURE

In order to improve installation ergonomics while also improving part retention, the inventors have realized that it is desirable to improve installation characteristics of vehicle parts without resorting to rigidity increases that may require undesirable levels of force for installation.

Therefore, according to embodiments of the present disclosure a vehicle grille according to claim 1 is provided.

By providing such a vehicle grille, the resistance during installation may remain unchanged, while an increase in retention strength is created. This may be true for at least the reason that the bumper cover nail may be prevented from rotating and disengaging when unintentional force is applied from a front portion of the vehicle grille. An installer may therefore, perform actions remaining within ergonomic standards, and a vehicle grille may be installed more securely.

The support means may be resiliently deflectable about its proximal end and biased toward the bumper cover nail.

The vehicle grille includes reinforcing means configured to produce a desired rigidity of the support means.

The support means includes the reinforcing means.

The reinforcing means may include a portion of increased thickness, and optionally a different material than the support means.

The support means may extend from the vehicle grille, and optionally be formed integrally with the vehicle grille.

The vehicle grille may be configured as a rear-install type grille.

The support means may be configured to engage with the bumper cover nail only in a fully installed position of the vehicle grille.

According to further embodiments of the present disclosure, a vehicle including the vehicle grille as described above is provided.

According to still further embodiments of the present disclosure, a vehicle grille is provided. The vehicle grille includes a recess configured to engage with a portion of a bumper cover, a lug configured to engage with a portion of a bumper cover nail to retain the vehicle grille in an installed position, and a tab configured to engage with the bumper cover nail to prevent disengagement of the lug.

The tab may be resiliently deflectable about its proximal end and biased toward the bumper cover nail.

The vehicle grille may further include a reinforcing rib configured to produce a desired rigidity of the tab.

The tab may include the reinforcing rib.

The reinforcing rib may include a portion of increased thickness on the tab.

The reinforcing rib may include a different material than the tab.

The tab may extend from the vehicle grille.

The tab may be formed integrally with the vehicle grille

The vehicle grille may be configured as a rear-install type grille.

The tab may be configured to engage with the bumper cover nail only in a fully installed position of the vehicle grille.

According to still further embodiments of the present disclosure, a vehicle comprising the vehicle grille according to the above described

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Fig. 1 shows a front end of an exemplary vehicle including a grille affixed to a front bumper of a vehicle;
Fig. 2A shows a portion of a back side of an exemplary prior art vehicle grille and bumper;
Fig. 2B shows a cross section taken at A-A of Fig. 2A;
Fig. 2C shows a cross section taken at B-B of Fig. 2A;
Fig. 3A shows a portion of a back side of an exemplary vehicle grille and bumper according to embodiments of the present disclosure; and
Fig. 3B is a cross-section taken at B-B of Fig. 3A.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

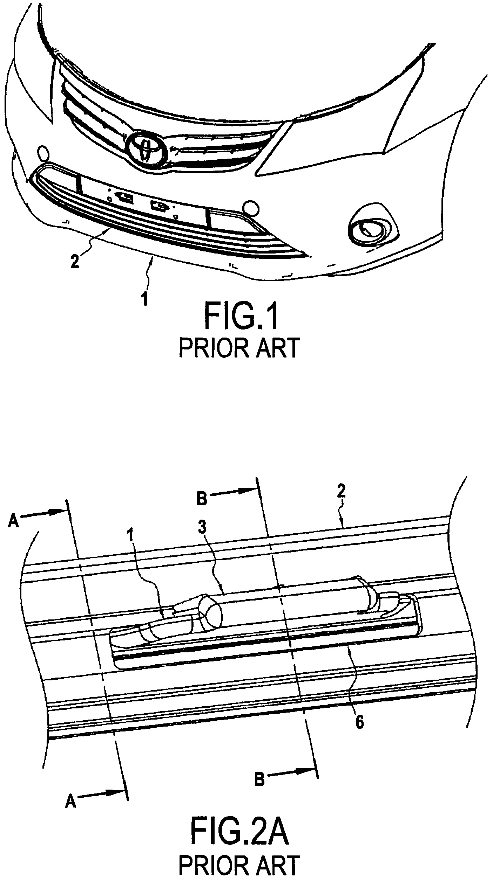

Fig. 1 shows a front end of an exemplary vehicle including a vehicle grille 2 installed on a vehicle, e.g., a grille housing. Importantly, directional references used herein, unless otherwise indicated, are intended to be determined from an "installed position" of grille 2. In other words, when grille 2 has been placed in its locked and fully forward position within the grille housing of the vehicle, as shown at Fig. 1, the grille is in the installed position and directional references may be taken from such position.

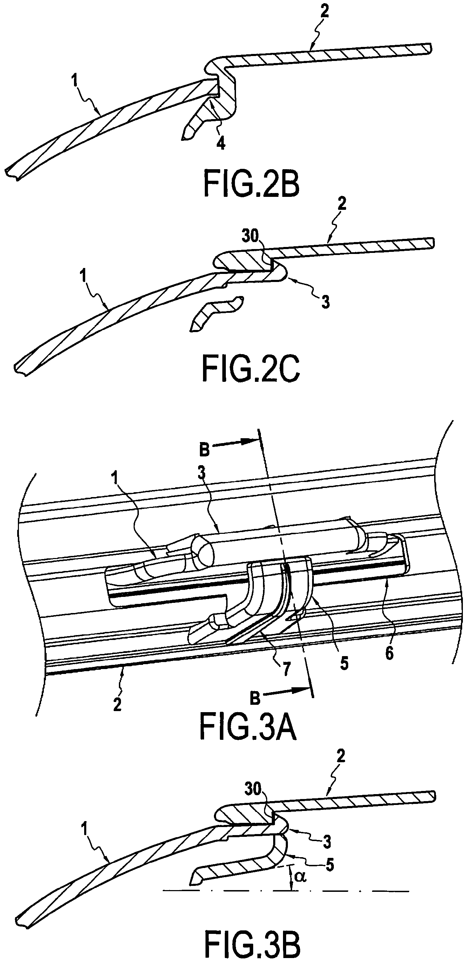

Fig. 2A shows a portion of a back side of an exemplary prior art vehicle grille 2 and bumper cover 1, while Fig. 2B shows a cross section of the grille and bumper of Fig. 2A taken along A-A. Vehicle grille 2 includes one or more grille holes 6, and a locking structure 4 configured to interface with a portion of the bumper cover 1 to create a clip.

Grille 2 and bumper cover 1 may be fabricated from any suitable material, for example, metal and/or plastic (e.g., polypropylene), and may be formed by way of any suitable process, e.g., stamping, molding, overmolding, cutting, etc.

One or more grille holes 6 may be formed in grille 2, and may be configured to permit rear installation of vehicle grille 2. For example, by permitting a bumper cover nail 3, which extends from a rear portion of a bumper cover 1 toward a rear of a vehicle, to be inserted through one or more grille holes 6, while grille 2 is pushed toward a forward portion of the vehicle, a rear-installation can be performed. In this way, grille 2 may be placed in an installed position at a forward portion of the vehicle as shown in Fig. 1.

When grille 2 has been placed in an installed position, i.e., in a forward position within a grille housing of the vehicle, a locking structure, for example, a recess 4 configured to engage with bumper cover 1, acts to retain grille 2 such that a force becomes required to "unclip" grille 2 from bumper cover 1 (e.g., to force the recess 4 of grille 2 off of bumper cover 1).

In addition, as shown at Fig. 2C, a lug 30 present on a portion of grille 2 interfaces with bumper cover nail 3 to further create retention force by way of, for example, a "snap fit." The inventors have recognized that if bumper cover nail 3 is permitted to rotate about a proximal end (i.e., about bumper cover 1), then lug 30 may become disengaged and allow movement of grille 2.

In other words, such a configuration generally does not create enough retention force, and if bumper cover nail 3 (see Fig. 2C) is free to rotate in grille hole 6 about its proximal end. Grille 2 is then able to release from its locked position despite the locking structure 4, and it becomes easy to disengage grille 2 and separate it from bumper cover 1 when it is pushed, for example, by hand from the front of grille 2.

If the rigidity of the structure is increased, this may aid in reducing the propensity of bumper cover nail 3 to rotate about its proximal end, however, such an increase in rigidity also increases installation force. Such an increase may result in exceeding ergonomic norms, while only moderately aiding in solving disengagement issues.

Fig. 3A shows a portion of a back side of an exemplary vehicle grille and bumper according to embodiments of the present disclosure, while Fig. 3B shows a cross-section taken at B-B of Fig. 3A. Notably, vehicle grille 2 of the present disclosure also includes a locking structure 4, bumper cover nail 3, and lug 30, as described above, and therefore, these features will not be further described.

In addition, vehicle grille 2 of the present disclosure includes a second locking mechanism 5, for example, a tab, configured to engage with bumper cover nail 3 to prevent disengagement of lug 30 from bumper cover nail 3.

Tab 5 may be integrally formed with grille 2 and may extend from grille 2 toward a rear direction of the vehicle as determined when grille 2 is in its installed position. For example, during a molding process for forming grille 2, tab 5 may be formed as a result of the mold shape at time of formation of grille 2. Alternatively, tab 5 may be formed after formation of grille 2, e.g., by way of an over molding process, an adhesive process, welding process, etc. One of skill in the art will recognize that other ways of providing tab 5 on grille 2 may be used without departing from the scope of the present disclosure.

Tab 5 may be elastically deflectable about its proximal end (i.e., the end affixed to grille 2) and may be biased such that when grille 2 is installed, a force is exerted on bumper cover nail 3 at a point of engagement between bumper cover nail 3 and tab 5. For example, tab 5 may extend at an angle α away from grille 2, such an angle ranging from, for example, 1 to 89.5 degrees, 20 to 80 degrees, and even 30 to 50 degrees from horizontal (as determined in an installed position of grille 2), so as to be angled toward bumper cover nail 3 in an installed position. Such an angle may then result in a type of "interference fit" when grille 2 is installed and pressed to a forward position where locking occurs. In other words, tab 5 may remain elastically deflected in an installed position by way of contact with bumper cover nail 3, such that the bias to return to an at rest position of tab 5 results in a force being exerted by tab 5 on bumper cover nail 3.

Alternatively, or in addition, a portion of tab 5, e.g., at a distal portion of tab 5, may be shaped so as to extend in a direction (e.g., perpendicular to a first portion of tab 5) toward bumper cover nail 3 in an installed position. For example, tab 5 may be shaped in substantially an "L" type shape, where an inflected portion (e.g., at a distal portion of tab 5) of the L may be curved, for example, toward bumper cover nail 3 as determined in an installed position of grille 2 such that distal end of tab 5 touches or engages at least a portion of bumper cover nail 3. One of skill in the art will recognize that other shapes may also be used (e.g., a "J" shape) without departing from the scope of the present disclosure.

Proximal end of tab 5 may be positioned offset from an edge (e.g., a bottom edge or a top edge) of grille hole 6, e.g., with a range of 1 to 200 mm from such an edge. Alternatively, proximal end of tab 5 may be formed at a position nearer an edge of grille hole 6, for example a portion of tab 5 may coincide with an edge of grille hole 6.

A thickness of tab 5 may depend on a material from which tab 5 is fabricated as well as a desired force to be applied to bumper cover nail 3, among others. For example, when taking into account a shape and angle α of tab 5, a thickness of between 1 and 10 mm, between 2 and 8 mm, and even between 3 and 5 mm, may be determined to provide a desirable level of rigidity/elasticity for tab 5.

Regarding width and length dimensions of tab 5, one of skill in the art will recognize that such dimensions may be determined based on a design of a particular application, taking into account, for example, length and width of bumper cover nail 3, clearance considerations, force to be exerted at distal end of tab 5, among others.

A reinforcing rib 7 extending along a length of tab 5 and configured to "tune" a rigidity of tab 5 is provided. For example, reinforcing rib 7 may be configured to result in an increase of rigidity of between 10 and 80 percent, between 20 and 60 percent, and even between 30 and 50 percent, of tab 5.

Reinforcing rib 7 may be positioned along a centerline of tab 5, so as to produce symmetric reinforcement of tab 5. Alternatively, one or more reinforcing ribs 7 may be positioned at predetermined positions along a width of tab 5.

Reinforcing rib 7 (or the one or more reinforcing ribs) may have a width comprising between 1 and 80 percent of tab 5. For example, according to some embodiments, depending on a desired effect, reinforcing rib may comprise a width of approximately 20 percent of a width of tab 5.

Reinforcing rib extends along an entire length of tab 5.

According to some embodiments, reinforcing rib 7 may comprise an area of increased thickness on tab 5, for example, an increase of between 1 and 80 percent, between 10 and 60 percent, and even between 20 and 40 percent of an actual thickness of tab 5. According to some embodiments, reinforcing rib may comprise a material different from that of tab 5, for example, a metal band and/or a different plastic material (e.g., overmolded onto tab 5).

Where an area of increased thickness is used to form reinforcing rib 7, reinforcing rib 7 may be formed integrally with tab 5 and may be of the same material as that forming tab 5. For example, where tab 5 is formed during a molding process, an area of increased thickness may be taken into account when preparing the mold used for fabricating tab 5 such that additional material is present, thereby forming reinforcing rib 7.

Alternatively, reinforcing rib 7 may be added to tab 5 during a process subsequent to fabrication of tab 5. For example, after molding of tab 5 (e.g., along with grille 2) an overmolding step may be carried out in which reinforcing rib 7 is overmolded onto tab 5. In another example, reinforcing rib 7 may be affixed to tab 5 using an adhesive such that a bond is formed between reinforcing rib 7 and tab 5. One of skill in the art will recognize that various methods for providing reinforcing rib 7 on tab 5 may be used without departing from the scope of the present disclosure.

Notably, despite the rigidity of tab 5 as a result of reinforcing rib 7, virtually no change in installation force is realized based on the positioning of tab 5 and a contact point of tab 5 with bumper cover nail 3. In other words, grille 2 may be rear installed and pushed 99 percent of a distance forward into position before tab 5 engages with bumper cover nail 3. At such time of engagement, only minimal additional force is applied by an installer to result in final locking of grille 2 in position, and for distal end of tab 5 to engage bumper cover nail 3. Bumper cover nail 3 is then substantially prevented from rotating about its proximal end, and thereby, disengagement of bumper cover nail 3 from lug 30 is prevented.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A vehicle grille (2), comprising:
a first locking means (4) configured to engage with a portion of a bumper clip (1);
a second locking means (3, 30) configured to engage with a portion of a bumper cover nail (3) to retain the vehicle grille (2) in an installed position;
a support means (5) configured to engage with the bumper cover nail (3) to prevent disengagement of the second locking means (3, 30); and the support means (5) comprising a reinforcing means (7) extending along the support means (5) and configured to produce a desired rigidity of the support means (5), **characterized in that** the reinforcing means (7) extend along an entire length of the support means (5).

2. The vehicle grille (2) according to the previous claim, wherein the support means (5) is resiliently deflectable about its proximal end and biased toward the bumper cover nail (3).

3. The vehicle grille (2) according to any of claims 1-2, wherein the reinforcing means (7) comprises a portion of increased thickness, and optionally a different material than the support means (5).

4. The vehicle grille (2) according to any of the preceding claims, wherein the support means (5) extends from the vehicle grille (2), and optionally formed integrally with the vehicle grille (2).

5. The vehicle grille (2) according to any of the preceding claims, wherein the vehicle grille (2) is configured as a rear-install type grille.

6. The vehicle grille (2) according to any of the previous claims, wherein the support means (5) engages with the bumper cover nail (3) only in a fully installed position of the vehicle grille (2).

7. A vehicle comprising the vehicle grille (2) according to any of claims 1-6.

## Patentansprüche

1. Fahrzeugkühlergrill (2), umfassend:
ein erstes Verriegelungsmittel (4), das dazu ausgebildet ist, mit einem Abschnitt eines Stoßfänger-Clips (1) in Eingriff zu stehen,
ein zweites Verriegelungsmittel (3, 30), das dazu ausgebildet ist, mit einem Abschnitt eines Stoßfängerabdeckungsnagels (3) in Eingriff zu stehen, um den Fahrzeugkühlergrill (2) in einer montierten Position festzuhalten,
ein Stützmittel (5), das dazu ausgebildet ist, mit dem Stoßfängerabdeckungsnagel (3) in Eingriff zu stehen, um ein Lösen des zweiten Verriegelungsmittels (3, 30) zu verhindern, und wobei das Stützmittel (5) ein Verstärkungsmittel (7) umfasst, das sich entlang dem Stützmittel (5) erstreckt und dazu ausgebildet ist, eine gewünschte Steifigkeit des Stützmittels (5) zu bewirken, **dadurch gekennzeichnet, dass** sich das Verstärkungsmittel (7) entlang einer gesamten Länge des Stützmittels (5) erstreckt.

2. Fahrzeugkühlergrill (2) nach dem vorhergehenden Anspruch, wobei das Stützmittel (5) um sein proximales Ende elastisch durchbiegbar ist und in Richtung des Stoßfängerabdeckungsnagels (3) vorgespannt ist.

3. Fahrzeugkühlergrill (2) nach einem der Ansprüche 1 oder 2, wobei das Verstärkungsmittel (7) einen Abschnitt von erhöhter Dicke und optional ein anderes Material als das Stützmittel (5) aufweist.

4. Fahrzeugkühlergrill (2) nach einem der vorhergehenden Ansprüche, wobei sich das Stützmittel (5) von dem Fahrzeugkühlergrill (2) weg erstreckt und optional einstückig mit dem Fahrzeugkühlergrill (2) ausgebildet ist.

5. Fahrzeugkühlergrill (2) nach einem der vorhergehenden Ansprüche, wobei der Fahrzeugkühlergrill (2) als Kühlergrill vom Rückseitenmontagetyp ausgebildet ist.

6. Fahrzeugkühlergrill (2) nach einem der vorhergehenden Ansprüche, wobei das Stützmittel (5) mit dem Stoßfängerabdeckungsnagel (3) nur in einer vollständig montierten Position des Fahrzeugskühlergrills (2) in Eingriff steht.

7. Fahrzeug, umfassend den Fahrzeugkühlergrill (2) nach einem der Ansprüche 1 -6.

## Revendications

1. Calandre de véhicule (2), comportant :
des premiers moyens de blocage (4) configurés pour engager une partie d'une agrafe de pare-chocs (1) ;
des deuxièmes moyens de blocage (3, 30) configurés pour engager une partie d'une broche de cache de pare-chocs (3) pour maintenir la calandre de véhicule (2) dans une position installée ;
des moyens de support (5) configurés pour engager la broche de cache de pare-chocs (3) pour éviter un dégagement des deuxièmes moyens de blocage (3, 30) ; et
les moyens de support (5) comportant des moyens de renfort (7) s'étendant le long des moyens de support (5) et configurés pour produire une rigidité souhaitée des moyens de support (5), **caractérisée en ce que** les moyens de renfort (7) s'étendent sur une longueur entière des moyens de support (5).

2. Calandre de véhicule (2) selon la revendication précédente, dans laquelle les moyens de support (5) peuvent être fléchis de manière élastique autour de leur extrémité proximale et sont rappelés vers la broche de cache de pare-chocs (3).

3. Calandre de véhicule (2) selon l'une quelconque des revendications 1 et 2, dans laquelle les moyens de renfort (7) comportent une partie d'épaisseur accrue, et éventuellement une matière différente de celles des moyens de support (5).

4. Calandre de véhicule (2) selon l'une quelconque des revendications précédentes, dans laquelle les moyens de support (5) s'étend depuis la calandre de véhicule (2), et sont éventuellement formés d'un seul tenant avec la calandre de véhicule (2).

5. Calandre de véhicule (2) selon l'une quelconque des revendications précédentes, dans laquelle la calandre de véhicule (2) est configurée comme une calandre du type installée par l'arrière.

6. Calandre de véhicule (2) selon l'une quelconque des revendications précédentes, dans laquelle les moyens de support (5) engagent la broche de cache de pare-chocs (3) seulement dans une position entièrement installée de la calandre de véhicule (2).

7. Véhicule comportant la calandre de véhicule (2) selon l'une quelconque des revendications 1 à 6.
